Europäisches Patentamt

European Patent Office

Office européen des brevets

(19)

(11) **EP 1 577 644 A1**

(12) # DEMANDE DE BREVET EUROPEEN

(43) Date de publication:
**21.09.2005 Bulletin 2005/38**

(51) Int Cl.$^7$: **G01C 21/34**, G08G 1/0968

(21) Numéro de dépôt: **05290445.5**

(22) Date de dépôt: **25.02.2005**

(84) Etats contractants désignés:
**AT BE BG CH CY CZ DE DK EE ES FI FR GB GR HU IE IS IT LI LT LU MC NL PL PT RO SE SI SK TR**
Etats d'extension désignés:
**AL BA HR LV MK YU**

(30) Priorité: **08.03.2004 FR 0402406**

(71) Demandeur: **FRANCE TELECOM**
**75015 Paris (FR)**

(72) Inventeurs:
• **Auger, Jean-Laurent**
  **14790 Fontaine Etoupefour (FR)**

• **Lemee, Christophe**
  **14760 Breteville sur Odon (FR)**
• **Magret, Jean-Michel**
  **35235 Thorigne-Fouillard (FR)**

(74) Mandataire:
**Habasque, Etienne J. Jean-François et al**
**Cabinet Lavoix**
**2, Place d'Estienne d'Orves**
**75441 Paris Cédex 09 (FR)**

(54) **Procédé de guidage en temps réel d'un véhicule terrestre muni d'un système de navigation débarqué**

(57)    L'invention concerne un procédé de guidage d'un véhicule ($V_e$) muni d'un système de navigation débarqué vis-à-vis d'un serveur (S) de navigation externe.

Il consiste à transmettre (A) du module de positionnement du véhicule ($V_e$) vers le serveur (S) des coordonnées de position du véhicule, calculer (B) le temps de latence aller ($T_1$) retour ($T_2$) entre véhicule et serveur, estimer (C) les distances parcourues ($X_1$, $X_2$) par le véhicule (Ve) pendant le temps de latence aller et retour, (D) corriger les coordonnées de position du véhicule à l'instant courant de la valeur des distances parcourues ($X_1$, $X_2$) pour engendrer des coordonnées corrigées ($X_c$, $Y_c$), déclencher (E) la transmission d'un ordre de guidage lorsque les données corrigées correspondent à un positionnement du véhicule ($V_e$) permettant une réaction appropriée de l'utilisateur du véhicule.

Application à l'industrie des systèmes de guidage débarqués.

FIG.2a

$$Ve \qquad T_1 \qquad Xo \qquad \overline{OG}(Xo)$$

$$T_2 \qquad \Delta_{xT}, \Delta_{yT}$$

$$T_0 \quad T_{0+1} \quad T_{0+2} \quad T_{0+3} \quad T_{0+j-2} T_{0+j-1} \; T_{0+j} \quad T_{0+j+1}$$

$$v$$

$$I_t \qquad T \begin{cases} X_T \\ Y_T \end{cases}$$

### FIG.2b

Tournez à droite

$T$

$T_{0+j-2}+T1+T2$

$*$ Arrivée

$T_{0+j+1}$ — OG reçu

### FIG.2c

Position émise

$T_{0+j-2}$

$Xo+j-2 \qquad Yo+j-2$

**Description**

L'invention concerne les systèmes de navigation routière et de guidage terrestre externe à un véhicule, encore désignés systèmes de navigation routière débarqués ou "off-board" en langage anglo-saxon.

Les systèmes de navigation routière sont des systèmes d'aide à la conduite et au guidage des véhicules terrestres qui permettent de calculer un itinéraire entre un point de départ et un point d'arrivée spécifiés par le conducteur et/ou la position actuelle du véhicule et de le présenter, par affichage déroulant par exemple, à l'utilisation de manière plus ou moins interactive.

Dans ce but, le système de navigation accède à une base de données cartographique qui regroupe tous les segments de route et l'itinéraire est calculé en concaténant des segments de route entre les points de départ et d'arrivée.

Ce processus est susceptible d'engendrer de nombreux itinéraires.

Une fonction supplémentaire est, en général, ajoutée, laquelle permet de déterminer une route particulière en fonction des préférences du conducteur.

A titre d'exemple, il peut choisir l'itinéraire présentant la distance la plus courte entre les points de départ et d'arrivée, mais il peut également choisir l'itinéraire permettant de relier ces deux points le plus rapidement possible. Ces deux itinéraires peuvent être identiques, totalement ou partiellement différents. Le conducteur peut aussi indiquer qu'il souhaite emprunter ou non des segments d'autoroute, ou au contraire éviter tous les frais de péage correspondants.

A l'heure actuelle il existe trois types de systèmes de navigation.

Le premier, dit embarqué, est un système autonome installé à bord d'un véhicule et disposant de sa propre cartographie, en général stockée sur un support optique tel que CD ROM ou DVD ROM.

Le deuxième, dit hybride, est un système où une partie des informations (en particulier la cartographie de masse) est déportée sur un serveur et une partie de la cartographie de masse, celle supportant l'itinéraire après calcul de ce dernier, est téléchargée dans le terminal qui va l'exploiter à la manière d'un système embarqué (on board).

Le troisième, dit débarqué (off board) est un système où tous les traitements sont déportés dans un serveur. Le terminal embarqué dans le véhicule se contente uniquement de remonter les informations de localisation GPS vers le serveur puis de restituer les indications en provenance du serveur, en particulier les ordres de guidage. La communication entre le serveur et le terminal embarqué s'effectue à travers des réseaux de télécommunication cellulaire.

Dans un système de navigation débarqué, du troisième type, le calcul de l'itinéraire est effectué et stocké dans le serveur. Ce dernier déroule, affiche par défilement, cet itinéraire et fournit au terminal les informations de guidage en fonction des informations de position qu'il reçoit du module de positionnement GPS de celui-ci.

Les systèmes de navigation débarqués existants actuellement s'appuient sur des réseaux de communication de téléphonie cellulaire pour échanger les informations entre le serveur et le terminal embarqué dans un véhicule.

Aucun des systèmes de navigation précités ne tient compte des délais de transmission inhérents au système de transmission utilisé. Les temps de latence, définis comme les délais entre l'émission d'une information et la réception de celle-ci, sont purement et simplement ignorés.

La présente invention a pour objet de remédier aux inconvénients précités des systèmes de navigation débarqués de l'art antérieur.

En particulier, un objet de la présente invention est de tenir compte, de manière adaptative, des délais de latence du réseau de transmission utilisé par les systèmes de navigation débarqués de l'art antérieur, afin d'en améliorer le mode opératoire et la fiabilité, indépendamment des caractéristiques du véhicule ou d'allure de ce dernier.

Un autre objet de la présente invention est en outre la mise en oeuvre d'un procédé et d'un serveur de navigation externe à un véhicule permettant de fournir à un terminal embarqué sur un véhicule d'un système de navigation débarqué des informations de guidage correspondant sensiblement à l'endroit où se trouvent le véhicule et le système embarqué sur ce dernier, au moment où ils reçoivent ces informations de guidage, et non à l'endroit où ils se trouvaient antérieurement, au moment où le module de positionnement embarqué sur ce véhicule a envoyé sa position géographique.

La présente invention a, en conséquence, pour objet un procédé de guidage en temps réel d'un véhicule terrestre muni d'un système de navigation débarqué, dans lequel le traitement des données de navigation et de guidage est effectué de manière déportée dans un serveur de navigation et de guidage externe au véhicule, à partir d'un module de positionnement embarqué dans ce véhicule et communiquant des informations de position du véhicule audit serveur.

Il est remarquable en ce qu'il consiste au moins à transmettre, du module de positionnement au serveur, des coordonnées de position du véhicule à un instant courant, calculer au niveau du serveur, le temps de latence aller et le temps de latence retour, temps de transmission aller respectivement retour entre le véhicule et le serveur, estimer, à partir d'informations de cartographie courante correspondant à la position géographique actuelle courante du véhicule et d'une estimation de la vitesse moyenne de ce dernier, sur une partie au moins d'un trajet de ce véhicule repéré vis-à-vis de ces informations de cartographie courante, la distance parcourue par le véhicule pendant le temps de latence aller respectivement retour, corriger les coordonnées de position du véhicule à l'instant courant de la valeur des distances parcourues pendant le temps de latence aller respectivement retour pour engendrer des coordonnées de position corrigées, déclencher la transmission d'un ordre de guidage dudit serveur vers le véhicule lorsque les coordonnées corrigées correspondent à un positionnement du véhicule permettant une réaction appropriée de l'utilisateur du véhicule en accord avec l'ordre de guidage.

L'invention a en outre pour objet un serveur de navigation et de guidage externe à un véhicule terrestre, ce serveur recevant des coordonnées de position du véhicule à des instants courants comprenant au moins un module d'adaptation d'informations de cartographie en fonction des coordonnées de position, un module de calcul d'itinéraire de feuille de route pilotant ce module d'adaptation de cartographie et un module de guidage du véhicule recevant des informations de position délivrées par le module d'adaptation d'information et délivrant un ordre de guidage sur coïncidence des informations de position délivrées par ledit module d'adaptation d'information avec des informations de position de changement de direction d'un trajet repéré vis-à-vis de ces informations de cartographie.

Il est remarquable en ce qu'il comprend en outre un module de calcul du temps de latence aller et du temps de latence retour, temps de transmission aller respectivement retour entre le véhicule terrestre et le serveur, un module d'estimation, à partir d'informations de cartographie courante correspondant à la position géographique actuelle courante du véhicule et d'une estimation de la vitesse moyenne du véhicule sur une partie au moins d'un trajet de ce dernier vis-à-vis de ces informations de cartographie courante, de la distance parcourue par le véhicule pendant le temps de latence aller respectivement retour et un module de correction des coordonnées de position du véhicule à l'instant courant de la valeur des distances parcourues pendant le temps de latence aller respectivement retour pour engendrer des coordonnées de position corrigées, les coordonnées de position corrigées étant substituées aux informations de position délivrées au module de guidage, ce qui permet de déclencher la transmission d'un ordre de guidage du serveur vers le véhicule lorsque les coordonnées corrigées correspondent à un positionnement du véhicule permettant une réaction appropriée de l'utilisateur du véhicule en accord avec l'ordre de guidage.

Le procédé et le serveur objets de l'invention trouvent application à l'équipement de systèmes de navigation routière et de guidage terrestre débarqués.

Ils seront mieux compris à la lecture de la description et à l'observation des dessins ci-après dans lesquels

- la figure 1a représente, à titre illustratif, un diagramme temporel des échanges d'informations entre un véhicule et un serveur d'un système de navigation déporté de l'art antérieur ;
- la figure 1b représente, à titre illustratif, un schéma de situation représentatif d'un inconvénient des systèmes de navigation déportés de l'art antérieur tel que représenté en figure 1a ;
- la figure 2a représente, à titre illustratif, un organigramme des étapes de mise en oeuvre du procédé objet de l'invention ;
- la figure 2b représente, à titre illustratif, un diagramme temporel analogue à celui de la figure 1a, mais dans lequel l'inconvénient des systèmes de navigation déporté de l'art antérieur est supprimé, grâce à la mise en oeuvre du procédé objet de l'invention ;
- la figure 2c représente, à titre illustratif, un schéma de situation analogue à celui de la figure 1b, mais dans lequel l'inconvénient des systèmes de navigation déportés de l'art antérieur est supprimé.
- la figure 3 représente un schéma synoptique fonctionnel d'un serveur spécifique plus particulièrement adapté à la mise en oeuvre du procédé de guidage en temps réel d'un véhicule terrestre, conforme à l'objet de la présente invention.

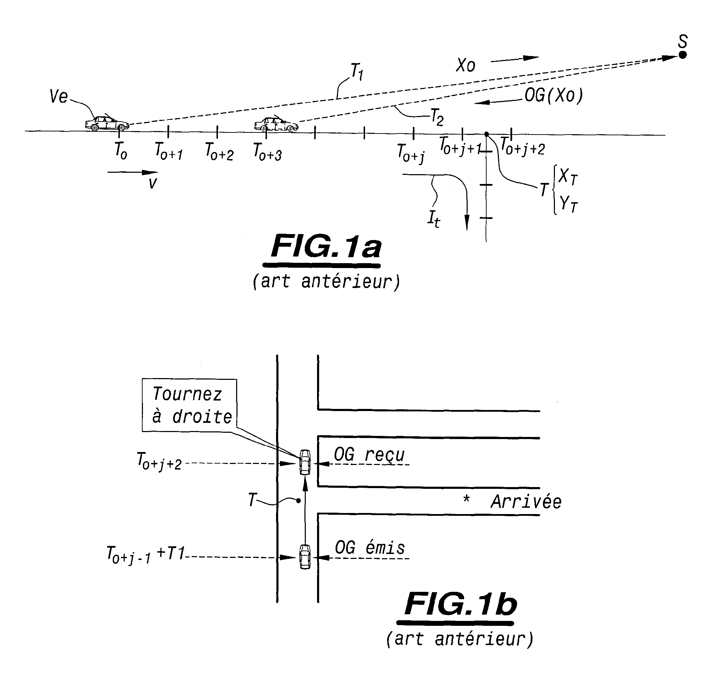

Une description plus détaillée du procédé de guidage en temps réel d'un véhicule terrestre muni d'un système de navigation débarqué conforme à l'objet de la présente invention sera maintenant donnée en liaison avec les figures 1 à 1b, relatives à l'art antérieur, et 2a, 2b, 2c.

En référence aux figures 1a et 1b, on a représenté une situation d'un véhicule $V_e$ équipé d'un système de navigation déporté de l'art antérieur dont le module de positionnement envoie des données de positionnement $X_0$, $Y_0$ à des instants successifs $T_0$, $T_{0+1}$, ..., $T_{0+j}$ par exemple vers un serveur S par l'intermédiaire d'un réseau de radiotéléphonie cellulaire, par exemple.

Ces informations sont traitées par le serveur S lequel positionne le véhicule Ve par rapport à l'itinéraire $I_t$ calculé pour ce dernier.

Si, à titre d'exemple non limitatif, la transmission des coordonnées de position est effectuée pour une vitesse moyenne du véhicule v à des instants successifs $T_0$, $T_{0+1}$ à $T_{0+j}$ et suivants à intervalles réguliers successifs, le temps de transmission $T_1$ des coordonnées de position du véhicule $V_e$ au serveur S et le temps de réception d'un ordre de guidage OG peut représenter plusieurs intervalles de temps par exemple.

A titre d'exemple non limitatif, le temps de latence aller $T_1$ et le temps de latence retour $T_2$ sont réputés présenter une valeur dont la somme est égale par exemple à trois intervalles successifs $T_0$ à $T_{0+3}$.

En référence à la figure 1 a, lorsque le serveur S émet alors un ordre de guidage OG correspondant aux coordonnées de position $X_0$, $Y_0$ émises à l'instant $T_0$ antérieur, cet ordre de guidage effectif OG déclenche un ordre par exemple "Tourner à droite" lorsque $X_0 = X_T$ et $Y_0 = Y_T$.

On considère que les temps de calcul des modules équipant le serveur S sont négligeables vis-à-vis des temps de latence aller respectivement retour.

Toutefois, lorsque le véhicule $V_e$ émet les coordonnées de position à un instant $T_0$ ou à tout instant successif $T_{0+j}$, le serveur S reçoit ces informations à l'instant $T_0 + T_1$, $T_1$ étant désigné comme temps de latence du réseau dans le sens véhicule $V_e$, équipé de son module de positionnement, -serveur S, alors que l'ordre de guidage OG est reçu à l'instant $T_0 + T_1 + T_2$ où $T_2$ désigne le temps de latence retour dans le sens serveur S - véhicule $V_e$.

En conséquence, pendant la somme des temps de latence $T_1 + T_2$, temps de latence aller respectivement retour, le véhicule a roulé et l'ordre de guidage OG peut arriver trop tard pour que le conducteur puisse valablement effectuer la manoeuvre de virage à droite, ainsi que représenté sur la figure 1b.

A titre d'exemple non limitatif, sur la figure 1b et compte tenu de la valeur des temps de latence $T_1 + T_2 = 3$ intervalles successifs, on peut constater, en référence aux figures 1a et 1b, que la transmission des coordonnées de position $X_{0+j-1}$, $Y_{0+j-1}$, à l'instant $T_{0+j-1}$, par exemple, ne permet pas au véhicule $V_e$ de recevoir l'ordre de guidage OG valablement pour effectuer l'opération de changement de direction du véhicule au croisement T. L'ordre de guidage OG émis à l'instant $T_{0+j-1} + T_1$, et reçu à l'instant $T_{0+j+2}$, par exemple, ainsi que représenté sur la figure 1b, arrivant trop tard, le véhicule $V_e$ ayant poursuivi son itinéraire sans changer de direction par virage à droite.

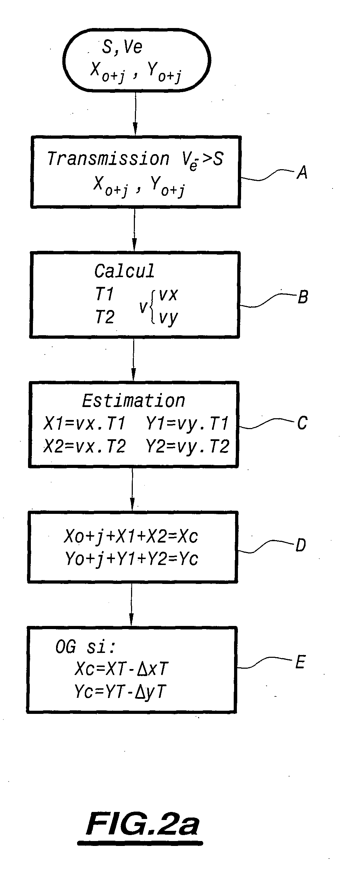

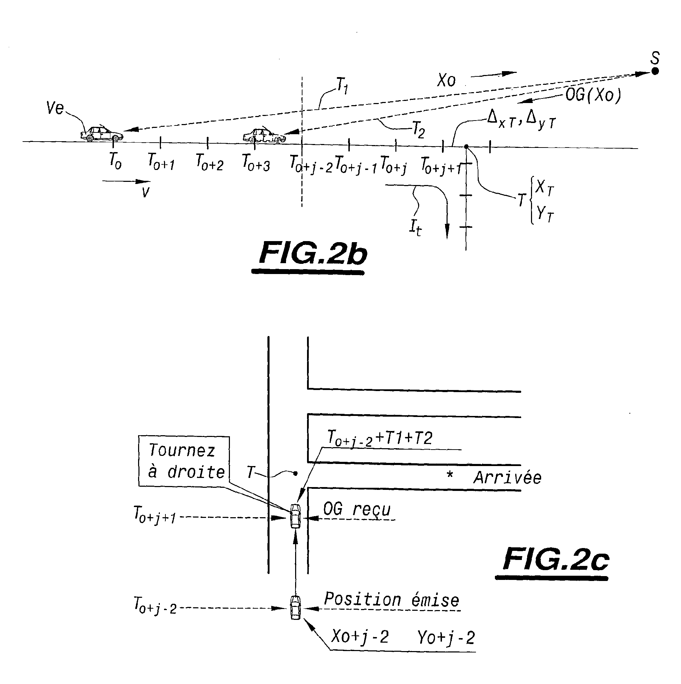

Le procédé objet de la présente invention sera maintenant décrit en liaison avec les figures 2a, 2b, 2c.

Sur la figure 2a, on considère la situation selon laquelle le véhicule terrestre $V_e$ est muni d'un système de navigation débarqué dans lequel le traitement des données de navigation et de guidage est effectué de manière déportée dans le serveur S de navigation et de guidage externe à ce véhicule.

Ce traitement est effectué à partir d'un module de positionnement embarqué dans ce véhicule, le module GPS précédemment cité par exemple, lequel permet de communiquer des informations de position, les coordonnées $X_{0+j}$, $Y_{0+j}$ successives du véhicule au serveur S.

En référence à la même figure 2a, on indique que le procédé objet de l'invention consiste, en une étape A, à transmettre du module de positionnement, c'est-à-dire du véhicule $V_e$ au serveur S, des coordonnées de position du véhicule à un instant courant donné. Par convention, les coordonnées de position sont notées $X_{0+j}$, $Y_{0+j}$ et les instants correspondants sont notés en correspondance $T_{0+j}$ successivement.

Bien entendu la fréquence et la période de transmission de ces coordonnées peut être fixée ou indexée sur la vitesse moyenne v du véhicule.

L'étape A précitée est alors suivie d'une étape B consistant à calculer au niveau du serveur S le temps de latence aller $T_1$ et le temps de latence retour $T_2$, temps de transmission aller respectivement retour entre le véhicule et le serveur.

Dans un mode de mise en oeuvre préférentiel non limitatif du procédé objet de la présente invention on considère le temps de latence aller $T_1$ est sensiblement ou égal au temps de latence retour $T_2$.

Cette hypothèse est valablement établie en raison du fait que le serveur est, dans tous les cas, délocalisé et l'échantillonnage réalisé pour la transmission des coordonnées de position successives $X_{0+j}$, $Y_{0+j}$ est suffisamment rapide.

L'étape B est alors suivie d'une étape C consistant à estimer, à partir d'informations de cartographie courante correspondant à la position géographique actuelle courante du véhicule $V_e$ et d'une estimation de la vitesse moyenne du véhicule, sur une partie au moins d'un itinéraire It de ce véhicule repéré vis-à-vis des informations de cartographie courante, la distance parcourue par le véhicule pendant le temps de latence aller respectivement retour.

Cette opération est représentée à l'étape C de la figure 2a par les relations :

$$X_1 = V_x\, T_1,\ Y_1 = V_y\, T_1\ ;\ X_2 = V_x\, T_2,\ Y_2 = V_y\, T_2.$$

On comprend, en particulier, que les informations de vitesse moyenne v du véhicule, sur la portion de segment de route empruntée, peuvent être décomposées en vitesse $V_x$ et $V_y$ selon l'axe des x et des y, cette information étant disponible dans une base de données décrivant le réseau routier pour la cartographie considérée. En conséquence $X_1$ et $X_2$ représentent les variations de coordonnées de position du véhicule $V_e$ pendant le temps de latence aller respectivement retour.

Le procédé objet de la présente invention est ensuite suivi d'une étape D consistant à corriger les coordonnées de position du véhicule à l'instant courant $T_{0+j}$ de la valeur des distances parcourues pendant le temps de latence aller respectivement retour $T_1$ et $T_2$ pour engendrer des coordonnées de position corrigées $X_c$, $Y_c$.

A l'étape D précitée, l'opération de correction est représentée par les relations :

$$X_{0+j} + X_1 + X_2 = X_c$$

$$Y_{0+j} + Y_1 + Y_2 = Y_c$$

L'étape D est alors suivie d'une étape E laquelle, conformément à un aspect remarquable du procédé objet de la présente invention, consiste à déclencher la transmission d'un ordre de guidage OG, du serveur S vers le véhicule $V_e$ lorsque les coordonnées corrigées $X_c$, $Y_c$ correspondent à un positionnement du véhicule $V_e$ permettant une réaction appropriée de l'utilisateur du véhicule en accord avec l'ordre de guidage considéré.

A l'étape E de la figure 2a, l'opération de déclenchement de la transmission de l'ordre de guidage OG est donnée par la condition :

$$X_c = X_T - \Delta_{XT}, Y_c = Y_T - \Delta_{YT}$$

où $X_c$, $Y_c$ désignent les coordonnées corrigées et $X_T$, $Y_T$ désignent les coordonnées du changement de direction repérées sur les informations de cartographie courante disponibles au niveau du serveur. En outre, selon un aspect plus particulier de mise en oeuvre du procédé objet de l'invention, $\Delta_{XT}$ et $\Delta_{YT}$ sont des valeurs permettant de définir une distance de garde vis-à-vis des coordonnées du centre T du changement de direction, permettant à l'utilisateur d'effectuer la manoeuvre de changement de direction de manière correcte et en toute sécurité. Cette distance de garde peut être fonction de la vitesse moyenne du véhicule.

Dans ces conditions l'ordre de guidage OG, ainsi que représenté en figures 2b et 2c, arrive au niveau du véhicule $V_e$ à un moment où l'utilisateur du véhicule peut valablement réagir pour assurer la manoeuvre indiquée par l'ordre de guidage.

Pour la mise en oeuvre du procédé objet de la présente invention, on indique que tous les échanges d'informations entre le véhicule $V_e$ et le serveur S sont horodatés et, bien entendu, les horloges internes de ces derniers sont synchronisées.

Il est ainsi possible de déduire de ces informations les temps de latence aller $T_1$ dans le sens véhicule $V_e$ - serveur S et dans le sens retour $T_2$ serveur S - véhicule $V_e$.

Dans un mode de mise en oeuvre préférentiel non limitatif, les temps de latence peuvent alors être calculés au niveau du serveur S, ainsi qu'indiqué ci-après :

$T_1$ = horodatage réception serveur des données du module de positionnement du véhicule $V_e$ - horodatage émission des coordonnées de positionnement par le module de positionnement du véhicule $V_e$ ;
$T_2$ = horodatage du module de réception des données serveur S - horodatage émission par le serveur S.

Sur la figure 2b, on a représenté une situation analogue à celle de la figure 1a, la transmission des coordonnées de positionnement permettant d'assurer l'exécution correcte de la manoeuvre par l'utilisateur correspondant, dans l'exemple donné précédemment, ayant lieu à l'instant courant $T_{0+j-2}$ pour un temps de latence total $T_1 + T_2$ correspondant à trois intervalles de transmission des coordonnées de positionnement.

Dans ces conditions, l'ordre de guidage OG peut alors être reçu à l'instant $T_{0+j+1}$ sensiblement qui est bien antérieur à l'instant d'atteinte par le véhicule du point de virage T de coordonnées $X_T$, $Y_T$.

Cette situation est également représentée en figure 2c.

Bien entendu, l'égalité représentée à l'étape E de la figure 2A de transmission de l'ordre de guidage OG peut être assortie de la distance de garde de réception de l'ordre de guidage $\Delta_{XT}$ et $\Delta_{YT}$ laquelle peut être fonction bien entendu de la vitesse moyenne du véhicule.

Ce mode opératoire permet d'assurer la réception de l'ordre de guidage en un instant suffisamment antérieur à l'atteinte par le véhicule du point de coordonnées T, $X_T$, $Y_T$ afin que le conducteur puisse assurer la manoeuvre nécessaire au changement de direction.

On comprend ainsi que l'opération consistant à déclencher la transmission de l'ordre de guidage OG du serveur S vers le véhicule peut être effectuée avantageusement à un instant déterminé permettant la coïncidence entre les coordonnées corrigées $X_c$, $Y_c$ et les coordonnées du point déterminé $X_T$, $Y_T$ de changement de direction du véhicule sur une partie au moins d'un trajet du véhicule repéré vis-à-vis des informations de cartographie courantes, lorsque les relations sont sensiblement vérifiées $X_c = X_T$ et $Y_c = Y_T$ à l'intervalle de garde près.

D'une manière générale, lorsque le module de positionnement embarqué sur le véhicule $V_e$ est formé par un terminal GPS, les instants courants auxquels le module de positionnement transmet les coordonnées de position du véhicule peuvent alors être périodiques ainsi que décrit précédemment dans le cas des figures 2a à 2c, la valeur de la période d'échantillonnage du positionnement du véhicule, c'est-à-dire des instants auxquels les coordonnées de position sont transmises vers le serveur S, pouvant correspondre à une valeur de périodes multiple de la durée d'une trame GPS.

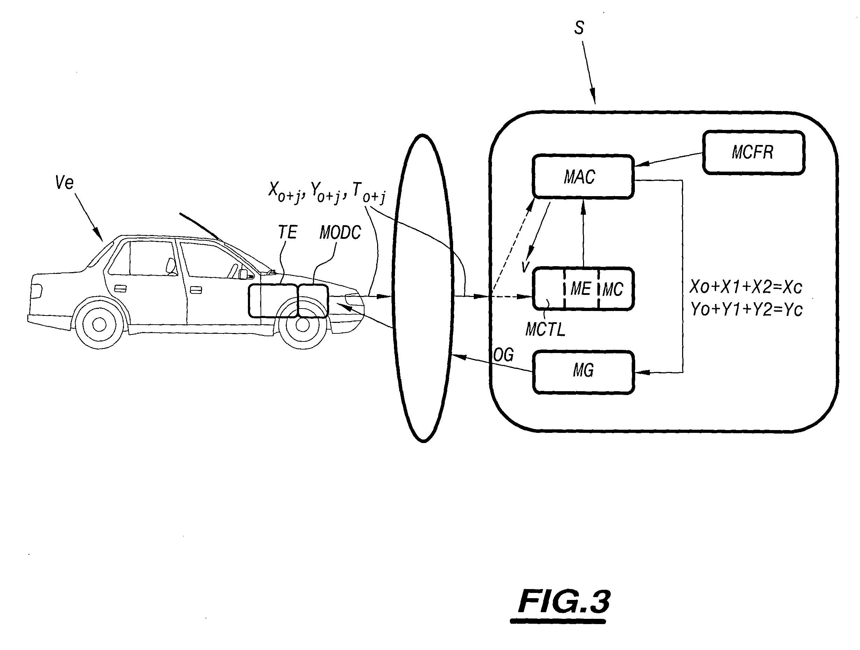

Une description plus détaillée d'un serveur de navigation et de guidage externe à un véhicule, serveur de type débarqué conforme à l'objet de la présente invention permettant, bien entendu, la mise en oeuvre du procédé objet de l'invention, tel que précédemment décrit, sera maintenant donnée en liaison avec la figure 3. D'une manière plus spécifique le véhicule $V_e$ est équipé d'un terminal TE de navigation et d'un module communication MODC.

D'une manière générale, on indique que le serveur S de navigation et de guidage objet de la présente invention peut être constitué par un serveur dédié à la navigation et au guidage constitutif d'un système de navigation et de guidage débarqué de type classique, auquel est ajouté un ensemble de fonctionnalités et de modules fonctionnels qui seront décrits ci-après.

De manière classique, le serveur S, conforme à l'objet de la présente invention, comprend un module MAC d'adaptation d'informations de cartographie en fonction des coordonnées de position $X_{0+j}$, $Y_{0+j}$ tel que décrit précédemment en liaison avec le procédé objet de la présente invention.

Le serveur S comporte en outre un module MCFR de calcul d'itinéraire de feuille de route permettant de piloter le module MAC d'adaptation de cartographie ainsi qu'un module MG de guidage du véhicule $V_e$ recevant des informations de position délivrées par le module MAC d'adaptation d'informations. Le module MG de guidage délivre un ordre de guidage OG sur coïncidence des informations de position délivrées par le module d'adaptation d'informations avec des informations de position de changement de direction d'un trajet référencé vis-à-vis des informations de cartographie précitées.

Outre les modules classiques connus de l'art antérieur, le serveur S objet de la présente invention comprend un module MCTL de calcul du temps de latence aller $T_1$ et du temps de latence retour $T_2$, ces temps étant définis comme les temps de transmission aller respectivement retour entre le véhicule $V_e$ et le serveur. On comprend que le module MCTL permet la mise en oeuvre de l'étape B de la figure 2a.

Le système comporte en outre un module ME d'estimation à partir d'informations de cartographie courantes correspondant à la position géographique actuelle courante du véhicule $V_e$ et d'une estimation de la vitesse moyenne v du véhicule sur une partie au moins d'un trajet It de ce dernier vis-à-vis des informations de cartographie courantes, de la distance parcourue par le véhicule pendant le temps de latence aller respectivement retour.

On comprend, en particulier, que le module ME d'estimation permet la mise en oeuvre de l'étape C de la figure 2a.

Enfin, le serveur S objet de la présente invention comprend un module MC de correction des coordonnées de position du véhicule à l'instant courant, de la valeur des distances parcourues pendant le temps de latence aller respectivement retour pour engendrer des coordonnées de position corrigées selon les relations données à l'étape D de la figure 2a.

Selon un aspect remarquable du serveur objet de la présente invention, les coordonnées de position corrigées $X_c$, $Y_c$ sont substituées aux informations de position délivrées au module de guidage MG.

Ce mode opératoire permet de déclencher la transmission d'un ordre de guidage OG du serveur S vers le véhicule $V_e$, lorsque les coordonnées corrigées $X_c$, $Y_c$ correspondent à un positionnement du véhicule permettant une réaction appropriée de l'utilisateur du véhicule en accord avec l'ordre de guidage OG.

La coïncidence précitée est mise en oeuvre conformément à l'étape E de la figure 2a. Bien entendu, les relations données à l'étape E peuvent comprendre l'introduction d'un intervalle de garde, ainsi que mentionné précédemment dans la description afin de permettre à l'utilisateur du véhicule $V_e$ d'exécuter la manoeuvre dans des conditions optimales de guidage et de sécurité du véhicule.

En outre, ainsi que représenté en figure 3, le module MCTL de calcul du temps de latence comporte au moins des moyens de mémorisation de la vitesse moyenne du véhicule, vitesse v, décomposés le cas échéant sur les axes de coordonnées x, y des moyens de cartographie, cette vitesse moyenne étant établie sur au moins un intervalle de temps séparant l'instant courant de l'instant courant précédent.

On comprend, en particulier, qu'à partir des informations de position successives $X_{0+j}$, $Y_{0+j}$ et $X_{0+j+1}$, $Y_{0+j+1}$, il est bien entendu possible, à partir des informations horodatées notamment, de calculer la vitesse moyenne du véhicule sur au moins un intervalle de temps séparant l'instant courant et un instant courant précédent.

Enfin, le module MAC peut comporter en outre un module de sélection de l'instant de transmission de l'ordre de guidage du serveur vers le véhicule en fonction de la vitesse moyenne du véhicule.

A titre d'exemple non limitatif, on indique que ce module de sélection prend en compte bien entendu l'intervalle de garde et le temps de propagation de l'ordre de guidage entre le serveur S et le véhicule $V_e$, ce temps de propagation pouvant être défini comme le temps de latence $T_2$ moyenne arithmétique de la somme des temps de latence aller respectivement retour par exemple.

Les modules MCTL, ME et MC peuvent avantageusement être formés par des modules logiciels directement exécutés par l'unité centrale du serveur S, non représentée sur les dessins.

## Revendications

1.  Procédé de guidage en temps réel d'un véhicule terrestre muni d'un système de navigation débarqué, dans lequel le traitement des données de navigation et de guidage est effectué de manière déportée dans un serveur de navigation et de guidage externe au véhicule, à partir d'un module de positionnement embarqué dans ce véhicule et communiquant des informations de position du véhicule audit serveur, **caractérisé en ce que** celui-ci consiste au moins à:

    a) - transmettre dudit module de positionnement audit serveur des coordonnées de position du véhicule à un instant courant ;
    b) - calculer, au niveau dudit serveur, le temps de latence aller et le temps de latence retour, temps de transmission aller respectivement retour entre ledit véhicule et ledit serveur ;
    c) - estimer, à partir d'informations de cartographie courante correspondant à la position géographique actuelle courante dudit véhicule et d'une estimation de la vitesse moyenne dudit véhicule sur une partie au moins d'un itinéraire de ce dernier repéré vis-à-vis de ces informations de cartographie courante, la distance parcourue par le véhicule pendant le temps de latence aller respectivement retour ;

d) - corriger lesdites coordonnées de position du véhicule à l'instant courant de la valeur des distances parcourues pendant le temps de latence aller respectivement retour pour engendrer des coordonnées de position corrigées ;

e) - déclencher la transmission d'un ordre de guidage dudit serveur vers le véhicule lorsque lesdites coordonnées corrigées correspondent à un positionnement du véhicule permettant une réaction appropriée de l'utilisateur du véhicule en accord avec l'ordre de guidage.

2. Procédé selon la revendication 1, **caractérisé en ce que** celui-ci consiste à estimer la vitesse moyenne du véhicule entre ledit instant courant et un instant courant précédent de transmission des coordonnées de position dudit véhicule.

3. Procédé selon l'une quelconque des revendications 1 ou 2, **caractérisé en ce que** le temps de latence aller et le temps de latence retour sont calculés par différence d'horodatage de messages échangés entre le véhicule et le serveur.

4. Procédé selon l'une des revendications 1 à 3, **caractérisé en ce que** lesdites coordonnées de position corrigées vérifient la relation :

$$\begin{cases} X_0 + X_1 + X_2 = X_c \\ Y_0 + Y_1 + Y_2 = Y_c \end{cases}$$

où $(X_0, Y_0)$ désignent les coordonnées de position de véhicule à chaque instant courant ;

$X_1$, $Y_1$ désignent les variations des coordonnées de position du véhicule pendant le temps de latence aller ;

$X_2$, $Y_2$ désignent les variations de coordonnées de position du véhicule pendant le temps de latence retour.

5. Procédé selon la revendication 4, **caractérisé en ce que** l'opération consistant à déclencher la transmission d'un ordre de guidage dudit serveur vers ledit véhicule est effectuée à un instant déterminé permettant la coïncidence entre lesdites coordonnées corrigées $(X_c, Y_c)$ et les coordonnées d'un point déterminé $(X_T, Y_T)$ de changement de direction du véhicule sur une partie au moins d'un trajet du véhicule repéré vis-à-vis des informations de cartographie courantes

$$X_c = X_T - \Delta_{XT}$$

$$Y_c = Y_T - \Delta_{YT} \,,$$

relations dans lesquelles $\Delta_{XT}$ et $\Delta_{YT}$ représentent un intervalle de garde.

6. Procédé selon l'une quelconque des revendications 1 à 5, **caractérisé en ce que** ledit module de positionnement embarqué étant formé par un terminal GPS, lesdits instants courants auxquels le module de positionnement transmet les coordonnées de position du véhicule sont périodiques, d'une valeur de période multiple de la durée d'une trame GPS.

7. Serveur de navigation et de guidage externe à un véhicule, ledit serveur recevant des coordonnées de position du véhicule à un des instants courants et comprenant au moins un module d'adaptation d'informations de cartographie en fonction desdites coordonnées de position, un module de calcul d'itinéraire de feuille de route pilotant ledit module d'adaptation de cartographie et un module de guidage dudit véhicule recevant des informations de position délivrées par ledit module d'adaptation d'information et délivrant un ordre de guidage sur coïncidence des informations de position délivrées par ledit module d'adaptation d'information avec des informations de position de changement de direction d'un trajet référencé vis-à-vis desdites informations de cartographie, **caractérisé en ce que** celui-ci comprend en outre un module de calcul du temps de latence aller et du temps de latence retour, temps de transmission aller respectivement retour entre ledit véhicule et ledit serveur ;

- un module d'estimation, à partir d'informations de cartographie courante correspondant à la position géographique actuelle courante dudit véhicule et d'une estimation de la vitesse moyenne dudit véhicule sur une partie au moins d'un trajet de ce dernier vis-à-vis de ces informations de cartographie courante, de la distance parcourue par le véhicule pendant le temps de latence aller respectivement retour ;

- un module de correction desdites coordonnées de position du véhicule à l'instant courant de la valeur des distances parcourues pendant le temps de latence aller respectivement retour pour engendrer des coordonnées de position corrigées, lesdites coordonnées de position corrigées étant substituées aux informations de position délivrées audit module de guidage, ce qui permet de déclencher la transmission d'un ordre de guidage dudit serveur vers le véhicule lorsque lesdites coordonnées corrigées correspondent à un positionnement du véhicule permettant une réaction appropriée de l'utilisateur du véhicule en accord avec l'ordre du guidage.

8.  Serveur selon la revendication 7, **caractérisé en ce que** ledit module de calcul de temps de latence comporte au moins des moyens de mémorisation de la vitesse moyenne du véhicule sur au moins un intervalle de temps séparant l'instant courant et un instant courant précédent.

9.  Serveur selon les revendications 7 ou 8, **caractérisé en ce que** ledit module de calcul de temps de latence comporte en outre des moyens de sélection de l'instant de transmission de l'ordre de guidage dudit serveur vers ledit véhicule, en fonction de la vitesse moyenne dudit véhicule.

## FIG.1a
(art antérieur)

## FIG.1b
(art antérieur)

EP 1 577 644 A1

$$S, Ve$$
$$X_{o+j}, Y_{o+j}$$

Transmission $V_e > S$
$X_{o+j}, Y_{o+j}$ — A

Calcul
$T1$
$T2$ $v\begin{cases} vx \\ vy \end{cases}$ — B

Estimation
$X1 = vx.T1 \quad Y1 = vy.T1$
$X2 = vx.T2 \quad Y2 = vy.T2$ — C

$Xo+j+X1+X2 = Xc$
$Yo+j+Y1+Y2 = Yc$ — D

OG si:
$Xc = XT - \Delta xT$
$Yc = YT - \Delta yT$ — E

# FIG.2a

FIG.2b

FIG.2c

$Xo+X1+X2=Xc$
$Yo+Y1+Y2=Yc$

MCFR

MAC

IME IMC

MCTL

MG

S

V

OG

$X_{0+j}, Y_{0+j}, T_{0+j}$

TE   MODC

Ve

**FIG.3**

**Office européen des brevets**

**RAPPORT DE RECHERCHE EUROPEENNE**

Numéro de la demande

EP 05 29 0445

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 2001/029425 A1 (MYR DAVID) 11 octobre 2001 (2001-10-11) * abrégé * ----- | 1,7 | G01C21/34 G08G1/0968 |
| A | EP 0 933 616 A (RENAULT) 4 août 1999 (1999-08-04) * abrégé * ----- | 1,7 | |

DOMAINES TECHNIQUES RECHERCHES (Int.Cl.7)

G01C
G08G

Le présent rapport a été établi pour toutes les revendications

| Lieu de la recherche | Date d'achèvement de la recherche | Examinateur |
|---|---|---|
| La Haye | 20 juin 2005 | De Buyzer, H |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 05 29 0445

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-06-2005

| Document brevet cité au rapport de recherche | Date de publication | Membre(s) de la famille de brevet(s) | Date de publication |
|---|---|---|---|
| US 2001029425 A1 | 11-10-2001 | US 6480783 B1<br>AU 4097201 A<br>WO 0169570 A2 | 12-11-2002<br>24-09-2001<br>20-09-2001 |
| EP 0933616 A | 04-08-1999 | FR 2774468 A1<br>EP 0933616 A1 | 06-08-1999<br>04-08-1999 |

EPO FORM P0460

Pour tout renseignement concernant cette annexe : voir Journal Officiel de l'Office européen des brevets, No.12/82